# EUROPÄISCHE PATENTSCHRIFT

(11) **EP 3 711 706 B1**
(45) Veröffentlichungstag und Bekanntmachung des Hinweises auf die Patenterteilung: **01.11.2023**
(21) Anmeldenummer: 19163971.5
(22) Anmeldetag: 20.03.2019
(51) Int. Cl.: A61C 8/00

(54) **ZAHNIMPLANTAT**
TOOTH IMPLANT
IMPLANT DENTAIRE

(43) Veröffentlichungstag der Anmeldung: 23.09.2020
(73) Patentinhaber: Walther, Gerd Axel, 71065 Sindelfingen (DE)
(72) Erfinder: Walther, Gerd Axel, 71065 Sindelfingen (DE)
(74) Vertreter: Patentanwälte Magenbauer & Kollegen Partnerschaft mbB

(56) Entgegenhaltungen:
- EP-A1- 2 878 280
- WO-A2-2011/036268
- DE-U1-202006 013 585
- DE-U1-202006 016 557

## Beschreibung

Die Erfindung betrifft ein Zahnimplantat zur Verankerung in einem Kieferknochen eines menschlichen Patienten.

Aus der EP 1 992 304 A1 ist ein insbesondere aus einem Keramikmaterial bestehendes Zahnimplantat mit einem Implantatkörper zum Verankern in einem Kieferknochen bekannt, bei dem ein Implantatpfosten als Zahnträger in den Implantatkörper eingesetzt wird und mittels einer als Steck-Drehverbindung ausgebildeten Renkverbindung verriegelt wird, wobei auf den Implantatpfosten anschließend ein Kopplungsglied aufgesetzt wird, das einerseits eine drehfeste Verbindung zwischen dem Implantatkörper und dem Implantatpfosten bewirkt und andererseits eine Krone tragen kann oder einen Brückenpfeiler für eine Brücke bilden kann.

Die WO 2011/036268 A1 offenbart eine Zahnersatzanordnung, die einen enossalen Implantatkörper zur Verankerung der Zahnersatzanordnung in einem Kieferknochen beinhaltet, wobei der Implantatkörper eine Innenbohrung aufweist, in welcher eine Gewindehülse mittels in der Implantatkörperinnenbohrung angebrachter Verriegelungsmittel formschlüssig verankert ist und ein Abutment, welches eine Abutmentinnenbohrung aufweist, zur Aufnahme einer Suprakonstruktion dient. Eine Kopfschraube verbindet das Abutment mit dem Implantatkörper, wobei ein Kopf der Kopfschraube in der Abutmentinnenbohrung abgestützt ist und ein Gewindeteil der Kopfschraube in die Gewindehülse eingreift. Die Verbindung zwischen dem Implantatkörper und dem Abutment ist reversibel, und trotzdem kann die Zahnersatzanordnung metallfrei ausgeführt werden.

Die DE 20 2006 013 585 U1 offenbart ein Verbindungselement für zweiteiliges Zahnimplantat mit einem distalen und einem proximalen Implantatsteil, die in einem miteinander verbundenen Zustand an einer Verbindungsstelle wenigstens mittelbar aneinander angrenzen und im Bereich der Verbindungsstelle einander zugewandte Oberflächen aufweisen, wobei in das distale Implantatsteil ein Verbindungselement in Form einer Gewindehülse eingebracht ist, und außerdem zwischen dem distalen Implantatteil und der Gewindehülse einander zugewandte Anschlagflächen vorgesehen sind, die bei der Montage und bei fertig montiertem Zahnimplantat die Montagekräfte von der Gewindehülse auf das distale Implantatsteil übertragen.

Die DE 20 2006 016 557 U1 offenbart ein Befestigungssystem zwischen Zirkonimplantat und einem speziellen Innendesign und verschiedenen Aufbauten. Das Zirkonimplantat wird in einem unteren Bereich einer Gegenbohrung eingebracht. Im Mantel der Innenbohrung des Zirkonimplantats befinden sich Aussparungen mit abwechselnd rotierenden Kerben. Der spreizbare Adapter ist geometrisch definiert und mittels einer formschlüssigen Verrastung in der Bohrung des Zirkonimplantats positioniert.

Die EP 2 878 280 A1 offenbart ein Dentalimplantatsystem mit einem Keramikimplantat und mit einem Abutment, welches zudem ein Einsatzelement für das Keramikimplantat enthält. Das Einsatzelement ist entweder aus nicht keramischem Material gefertigt oder ist im Wesentlichen aus Spritzgusskeramik gefertigt. Das Einsatzelement ist passend für eine Ausnehmung in einem proximalen Bereich des Keramikimplantates und in diese Ausnehmung eingesetzt oder einsetzbar. Das Einsatzelement dient der Befestigung des Abutments und ist dafür mit Befestigungsstrukturen ausgerüstet. Das in der Ausnehmung des Keramikimplantates angeordnete Einsatzelement ist mittels einer gegenüber axialem Zug kraftschlüssigen und/oder formschlüssigen Verbindung mit dem Keramikimplantat verbunden.

Die Aufgabe der Erfindung besteht darin, ein Zahnimplantat bereitzustellen, das eine vereinfachte Handhabung ermöglicht.

Diese Aufgabe wird für ein Zahnimplantat mit den Merkmalen des Anspruchs 1 gelöst. Hierbei umfasst das Zahnimplantat einen stabförmigen, längs einer Mittelachse erstreckten Implantatkörper, der an einer Außenoberfläche mit einem Gewinde versehen ist und der eine längs der Mittelachse erstreckte Ausnehmung aufweist, die in einem Mündungsbereich wenigstens eine, in radialer Richtung nach außen und über einen Umfangsabschnitt des Mündungsbereichs erstreckte Riegelausnehmung aufweist, ein Koppelteil, das zur Aufnahme in der Ausnehmung ausgebildet ist und das eine längs der Mittelachse erstreckte Gewindebohrung aufweist, wobei das Koppelteil an einem Endbereich einen zur Riegelausnehmung korrespondierenden, über einen Umfangsbereich des Koppelteils erstreckten Riegelbereich aufweist, der mit der Riegelausnehmung eine Sperrausnehmung begrenzt, und ein Aufsatzteil, das eine für eine Festlegung an dem Implantatkörper und dem Koppelteil ausgebildet ist und das einen Riegelvorsprung umfasst, der für einen Eingriff in die Sperrausnehmung ausgebildet ist und das eine längs der Mittelachse erstreckte, als Stufenbohrung ausgebildete Befestigungsausnehmung aufweist, in der eine Schraube aufgenommen ist, die mit einem Gewindeabschnitt in die Gewindebohrung des Koppelteils eingreift, um eine axiale und eine drehfeste Verriegelung zwischen dem Aufsatzteil, dem Koppelteil und dem Implantatkörper zu bewirken.

Vorzugsweise ist vorgesehen, dass der Implantatkörper zumindest nahezu identisch wie der aus der EP 1 992 304 A1 bekannte Implantatkörper aufgebaut ist. Zumindest umfasst der Implantatkörper gemäß der Erfindung einer Außenoberfläche mit einem Gewinde, das für die formschlüssige und anteilig auch kraftschlüssige Verankerung des Implantatkörpers im Kiefer eines Patienten vorgesehen ist. Ferner umfasst der Implantatkörper eine Ausnehmung, die sich längs der Mittelachse über einen Teil der Länge, insbesondere zumindest nahezu über die gesamte Länge, des Implantatkörpers erstreckt. Der Implantatkörper kann somit auch als einseitig geschlossene Hülse beschrieben werden. In einem Mündungsbereich der im Implantatkörper ausgebildeten Ausnehmung ist wenigstens eine, in radialer Richtung nach außen und über einen Umfangsabschnitt der Mündung erstreckte Riegelausnehmung vorgesehen, die mit einem entsprechend angepassten Koppelteil sowie einem entsprechend angepassten Aufsatzteil eine Wirkverbindung eingehen kann, um insbesondere eine drehfeste Kopplung zwischen dem Implantatkörper, dem Koppelteil und dem Aufsatzteil zu erzielen.

Die Aufgabe des Koppelteils besteht in der Schaffung einer kraftübertragenden Verbindung zwischen dem Aufsatzteil und dem Implantatkörper. Ferner kann das Koppelteil abhängig von einer Materialauswahl für das Koppelteil als Dämpfungselement zwischen dem Aufsatzteil und dem Implantatkörper dienen, um beispielsweise Kraftspitzen, wie sie beim Kauen auftreten können, nur gedämpft bis in den Implantatkörper weiterzuleiten und dadurch eine Patienten, der mit einem derartigen Zahnimplantat versorgt wurde, ein möglichst natürliches Kaugefühl hervorzurufen. Für die zuverlässige Verbindung zwischen dem Aufsatzteil und dem Implantatkörper ist vorgesehen, dass das Koppelteil an einem Umfangsbereich mit einem Riegelbereich versehen ist, der zusammen mit der Riegelausnehmung am Implantatkörper eine Sperrausnehmung begrenzt, die bei einem Eingriff eines am Aufsatzteil ausgebildeten Riegelvorsprungs eine drehfeste Kopplung der vorstehend angeführten Komponenten: Implantatkörper, Koppelteil und Aufsatzteil gewährleistet.

Das Aufsatzteil ist vorzugsweise für eine Montage am Koppelteil sowie am Implantatkörper in einer Montagerichtung ausgebildet, die zumindest nahezu parallel zur Mittelachse des Implantatkörpers ausgerichtet ist, bevorzugt ist vorgesehen, dass sich der wenigstens eine am Aufsatzteil ausgebildete Riegelvorsprung in einer parallel zur Mittelachse ausgerichteten Erstreckungsrichtung erstreckt. Eine im Aufsatzteil ausgebildete, längs der Mittelachse erstreckte als Stufenbohrung ausgebildete Befestigungsausnehmung weist einen entfernt vom Implantatkörper angeordneten Bohrungsabschnitt mit einem größeren Durchmesser sowie ein benachbart zum Kanalkörper angeordneten Bohrungsabschnitt mit demgegenüber kleineren Durchmesser auf, so dass in der Befestigungsausnehmung eine vorzugsweise kreisringförmige Stufe ausgebildet ist, die als Anlagefläche für eine axiale Stirnfläche einer Schraube dient. Diese Schraube greift mit einem Gewindeabschnitt in die Gewindebohrung des Koppelteils ein, um eine axiale Verriegelung zwischen dem Aufsatzteil, dem Koppelteil und dem Implantatkörper zu bewirken. Durch diese axiale Verriegelung sowie die Wirkverbindung zwischen dem Riegelvorsprung des Aufsatzteils und der vom Koppelteil und vom Implantatkörper begrenzten Sperrausnehmung wird die gewünschte drehfeste Kopplung der vorgenannten Komponenten gewährleistet.

Zweckmäßig ist es, wenn das Koppelteil aus einem hochfesten Kunststoff hergestellt ist und/oder wenn der Implantatkörper aus einem Keramikmaterial hergestellt ist und/oder wenn das Aufsatzteil aus einem Keramikmaterial hergestellt ist. Das Koppelteil muss einerseits eine zuverlässige Kraftübertragung zwischen dem Implantatkörper und dem Aufsatzteil gewährleisten und soll andererseits auch eine gewisse Dämpfungswirkung aufweisen, um Kraftspitzen zu bedämpfen, wie sie beispielsweise beim Kauen von härteren Nahrungsmitteln auftreten können. Vorteilhafte Materialien für das Koppelteil sind beispielsweise PEEK (Polyetheretherketon) und PAEK (Polyaryletherketon), die einen vorteilhaften Kompromiss zwischen mechanischer Dauerfestigkeit, Biokompatibilität und Dämpfungsverhalten aufweisen. Bevorzugt ist vorgesehen, dass sowohl der Implantatkörper als auch das Aufsatzteil aus einem Keramikmaterial hergestellt sind. Die Schraube zur Festlegung des Aufsatzteils am Koppelteil ist vorzugsweise aus Keramik für eine gänzlich metallfreie Versorgung oder aus Edelstahl oder Titan hergestellt. Für eine Montage / Demontage des Koppelteils in den Implantatkörper kann ein spezifisch angepasstes Eindrehwerkzeug oder Wechselinstrument verwendet werden, das eine Einstellung einer korrekten Orientierung des Koppelteils gegenüber dem Implantatkörper unterstützt. Hierzu ist am Implantatkörper ein Orientierungspunkt angebracht, der vom Benutzer durch ein am Wechselinstrument ausgebildetes Fenster dazu genutzt werden kann, das Koppelteil in die korrekte Rotationsposition gegenüber dem Implantatkörper zu bringen. Hiermit kann auch eine mehrfache Montage und Demontage des Koppelteils erfolgen, wenn beispielsweise nach einer gewissen Einsatzdauer des Zahnimplantats ein Verschleiß des Koppelteils aufgetreten ist und ein Austausch des bisherigen Koppelteils durch ein neues Koppelteil vorgenommen werden soll.

Erfindungsgemäß ist vorgesehen, dass die Riegelausnehmung an einem Ringbund des Implantatkörpers ausgebildet ist, der am Mündungsbereich der Ausnehmung angeordnet ist und dass der Riegelbereich des Koppelteils einen zur Riegelausnehmung korrespondierenden, radial nach außen erstreckten Riegelvorsprung umfasst, der in einer Verriegelungsstellung des Koppelteils mit dem Implantatkörper den Ringbund des Implantatkörpers in axialer Richtung formschlüssig hintergreift, wobei die Sperrausnehmung von einer Innenoberfläche der Riegelausnehmung und einer Seitenfläche des Riegelvorsprungs begrenzt ist.

Bei dieser Ausgestaltung des Implantatkörpers und des Koppelteils ist eine Verriegelung des Koppelteils am Implantatkörper in der Art eines Bajonettverschlusses vorgesehen. Hierzu ist im Mündungsbereich der Ausnehmung im Implantatkörper ein radial nach innen abragender Ringbund ausgebildet, der wenigstens eine in Umfangsrichtung erstreckte Riegelausnehmung aufweist. Die Riegelausnehmung dient als Durchgangsöffnung für einen Riegelvorsprung, der am Koppelteil ausgebildet ist, wobei für eine Montage des Koppelteils in die Ausnehmung des Implantatkörpers zunächst vorgesehen ist, den wenigstens einen Riegelvorsprung des Koppelteils in Überdeckung mit der Riegelausnehmung zu bringen. Anschließend kann das Koppelteil im Zuge einer linearen Bewegung längs der Mittelachse in die Ausnehmung des Implantatkörpers montiert werden und anschließend durch eine Schwenkbewegung um die Mittelachse mit dem Implantatkörper verriegelt werden. Hierbei wird ausgenutzt, dass der Ringbund am Implantatkörper und der Riegelvorsprung am Koppelteil in einer Axialrichtung längs der Mittelachse eine formschlüssige Verriegelung bilden. Ferner wird die Sperrausnehmung von einer Innenoberfläche der Riegelausnehmung und von einer Seitenfläche des Riegelvorsprungs begrenzt, sobald das Koppelteil am Implantatkörper verriegelt ist. Durch den Eingriff des Riegelvorsprungs in die Sperrausnehmung wird ebenfalls in formschlüssiger Weise, hier jedoch hinsichtlich einer Rotationsbewegung um die Mittelachse, zum einen eine unerwünschte Rotation des Aufsatzteils gegenüber dem Koppelteil und dem Implantatkörper verhindert und zum anderen eine unerwünschte Rotation des Koppelteils gegenüber dem Implantatkörper, die zu einer Entriegelung der formschlüssigen Verbindung zwischen Koppelteil und Implantatkörper führen könnte. Somit ist eine zuverlässige, lagerichtige Kopplung der Komponenten: Implantatkörper, Koppelteil und Aufsatzteil gewährleistet.

Bei einer Weiterbildung der Erfindung ist vorgesehen, dass am Ringbund mehrere Riegelausnehmungen ausgebildet sind und dass das Koppelteil mehrere Riegelvorsprünge umfasst und dass das Aufsatzteil mehrere Riegelvorsprünge aufweist. Hierdurch wird eine vorteilhafte Kraftübertragung zwischen dem Aufsatzteil, dem Koppelteil und dem Implantatkörper ermöglicht. Beispielhaft ist vorgesehen, dass die Riegelausnehmungen und die Riegelvorsprünge sowie die Sperrvorsprünge jeweils in gleicher Winkelteilung um die Mittelachse an den jeweiligen Komponenten Implantatkörper, Koppelteil und Aufsatzteil angeordnet sind, wodurch eine vorteilhafte, symmetrische Kraftübertragung zwischen diesen Komponenten gewährleistet ist.

In weiterer Ausgestaltung der Erfindung ist vorgesehen, dass der Ringbund des Implantatkörpers und die Riegelvorsprünge des Koppelteils mit einer in Umfangsrichtung rechteckigen Profilierung ausgebildet sind und/oder dass die Riegelausnehmungen am Ringbund des Implantatkörpers und die Riegelvorsprünge des Koppelteils derart aufeinander abgestimmt sind, dass das Koppelteil in genau einer vorgebbaren Rotationsstellung gegenüber dem Implantatkörper montierbar ist. Eine rechteckige Profilierung des Ringbunds und der Riegelvorsprünge ermöglicht eine vorteilhafte Kraftübertragung zwischen dem Implantatkörper und dem Koppelteil, ferner wird hierdurch auch eine vorteilhafte Krafteinleitung innerhalb des jeweiligen Bauteils ermöglicht. Ergänzend oder alternativ kann vorgesehen sein, dass die Riegelausnehmungen und Riegelvorsprünge eine einzige Montagestellung für das Koppelteil gegenüber dem Implantatkörper vorgeben. Dies ist insbesondere dann von Interesse, wenn der Koppelköper in einer vorgebbaren Vorzugsstellung an den Implantatkörper montiert werden soll.

Vorteilhaft ist es, wenn die Riegelausnehmungen des Implantatkörpers und die Riegelvorsprünge des Koppelteils und der wenigstens eine Riegelvorsprung des Aufsatzteils derart aufeinander abgestimmt sind, dass eine Anbringung des Aufsatzteils gegenüber dem Implantatkörper und dem Koppelteil in genau einer Rotationsstellung ermöglicht ist, so dass eine vorgebbare rotatorische Ausrichtung des Aufsatzteils gegenüber dem Implantatkörper gewährleistet ist.

Bevorzugt ist vorgesehen, dass das Aufsatzteil eine Krone bildet oder als Kronenhalter zur Festlegung einer becherartigen Krone ausgebildet ist. Bei einer Ausgestaltung des Aufsatzteils als Krone erfolgt nach der Festlegung der Schraube eine Verfüllung der Ausnehmung im Aufsatzteil. Sofern das Aufsatzteil als Kronenhalter ausgebildet ist, wird nach dem Verschrauben des Aufsatzteils mit dem Koppelteil eine becherartig ausgebildete Krone auf das Aufsatzteil aufgesetzt, wobei diese Krone entweder auf das Aufsatzteil zementiert oder mit dem Aufsatzteil verklebt werden kann. Alternativ kann das Aufsatzteil auch als Träger für eine herausnehmbare Prothetik, insbesondere als Unterkonstruktion für eine Sekundärkrone, ausgebildet sein, beispielhaft mit einer Kugelkopf-, Konus-, Steg- oder Teleskop-Geometrie.

Bei einer alternativen Variante der Erfindung ist vorgesehen, dass der Riegelbereich als randseitig offene Riegelvertiefung in einer Stirnfläche des Koppelteils ausgebildet ist und zusammen mit der Riegelausnehmung des Implantatkörpers die Sperrausnehmung begrenzt. Auch bei dieser Ausführungsform dient die formschlüssige Wechselwirkung zwischen dem Riegelvorsprung am Aufsatzteil und der Sperrausnehmung einer drehfesten Verriegelung des Koppelteils und des Aufsatzteils am Implantatkörper. Die axiale Festlegung des Koppelteils am Implantatkörper kann wahlweise reibschlüssig oder formschlüssig erfolgen.

Eine vorteilhafte Weiterbildung der Erfindung sieht vor, dass in der Ausnehmung des Implantatkörpers ein Innengewinde ausgebildet ist und dass an einer Außenoberfläche des Koppelteils ein korrespondierendes Außengewinde ausgebildet ist, womit in axialer Richtung parallel zur Mittelachse des Implantatkörpers eine formschlüssige Kopplung zwischen dem Koppelteil und dem Implantatkörper gebildet wird.

Zweckmäßig ist es, wenn die Gewindebohrung des Koppelteils längs der Mittelachse mit zunehmendem Abstand von einer Stirnfläche des Koppelteils, insbesondere konisch, verjüngt ausgebildet ist. Hierdurch wird das Koppelteil bei einem Einschrauben der Schraube zur Befestigung des Aufsatzteils aufgespreizt und es tritt eine vergrößerte Reibung zwischen dem Koppelteil und dem Implantatkörper auf, wodurch die Kopplung zwischen diesen beiden Komponenten noch verbessert wird. Dies gilt insbesondere für den Fall, dass das Koppelteil bereichsweise geschlitzt ausgebildet ist und somit eine elastische Deformation eines Teilbereichs des Koppelteils vereinfacht wird.

Vorteilhafte Ausführungsformen der Erfindung sind in der Zeichnung dargestellt. Hierbei zeigt
- Figur 1: eine rein schematische Schnittdarstellung einer ersten Ausführungsform eines Zahnimplantats, bei dem ein Koppelteil mit einem Bajonettverschluss axial mit einem Implantatkörper verriegelt ist und ein Aufsatzteil als Krone ausgebildet ist,
- Figur 2: eine rein schematische Schnittdarstellung einer zweiten Ausführungsform eines Zahnimplantats, das sich von der ersten Ausführungsform des Zahnimplantats gemäß der Figur 1 durch das Aufsatzteil unterscheidet, das als Träger für eine becherartig ausgebildete Krone dient,
- Figur 3: eine schematische perspektivische Darstellung eines Implantatkörpers, eines Koppelteils sowie eines Aufsatzteil, wie sie für die Zahnimplantate gemäß den Figuren 1 und 2 eingesetzt werden können,
- Figur 4: eine schematische Schnittdarstellung einer dritten Ausführungsform eines Zahnimplantats, bei dem ein Koppelteil mit dem Implantatkörper verschraubt ist und das Aufsatzteil gleichartig wie bei der Ausführungsform gemäß der Figur 2 ausgebildet ist,
- Figur 5: eine rein schematische Draufsicht auf den Implantatkörper gemäß der Figur 4, und
- Figur 6: eine rein schematische Draufsicht auf das Koppelteil gemäß der Figur 4.

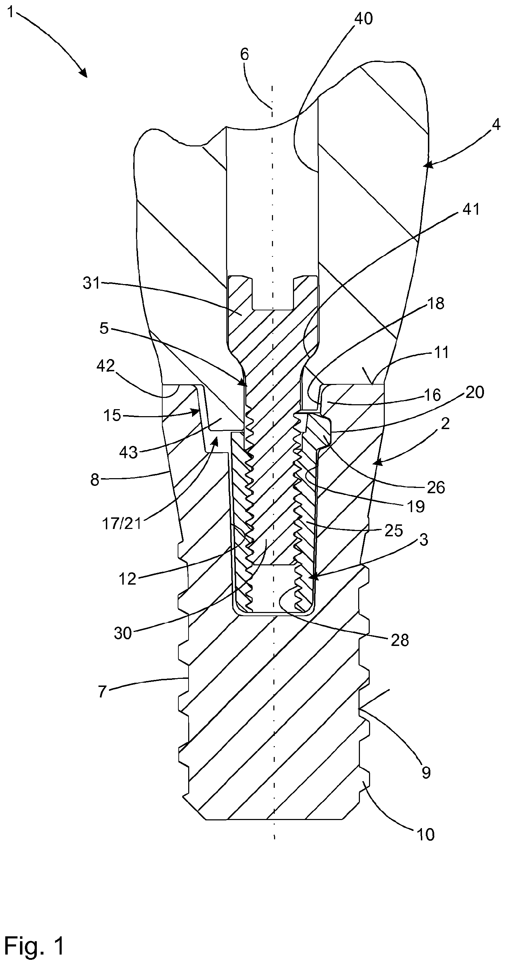

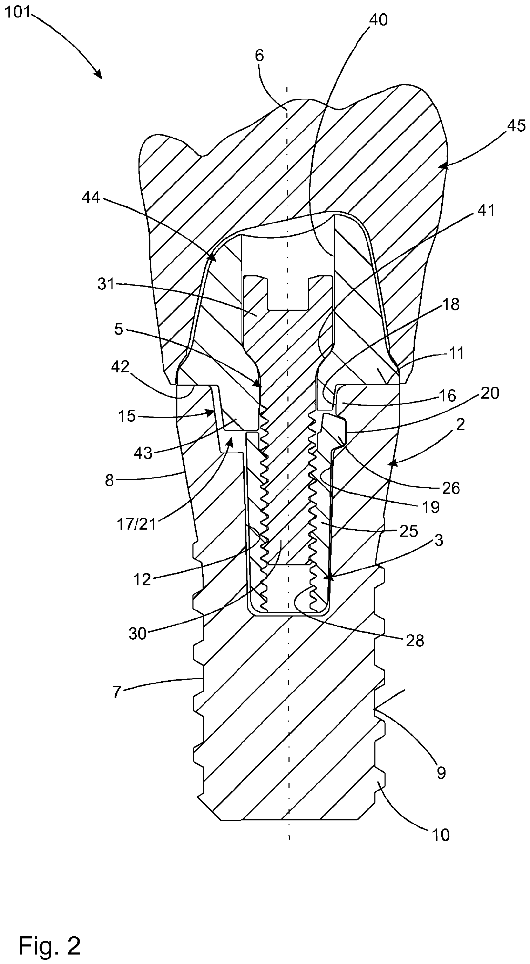

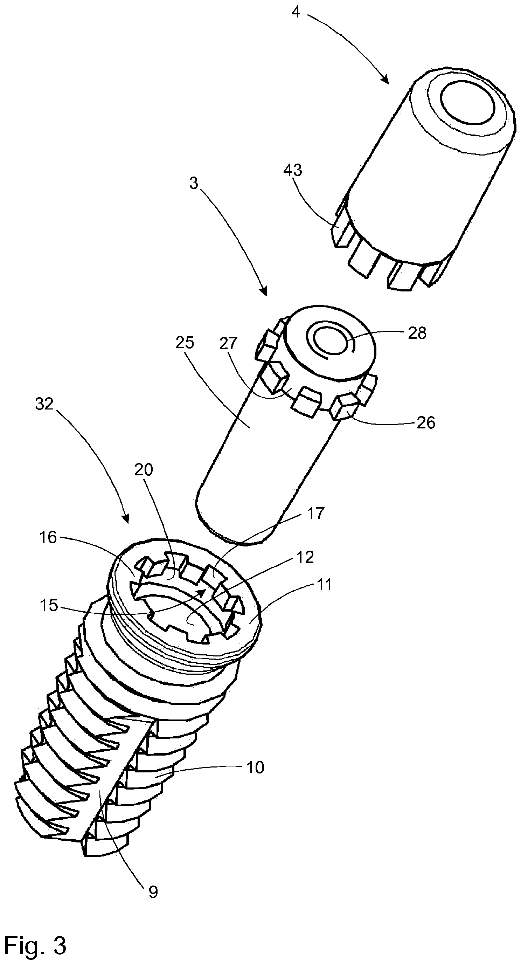

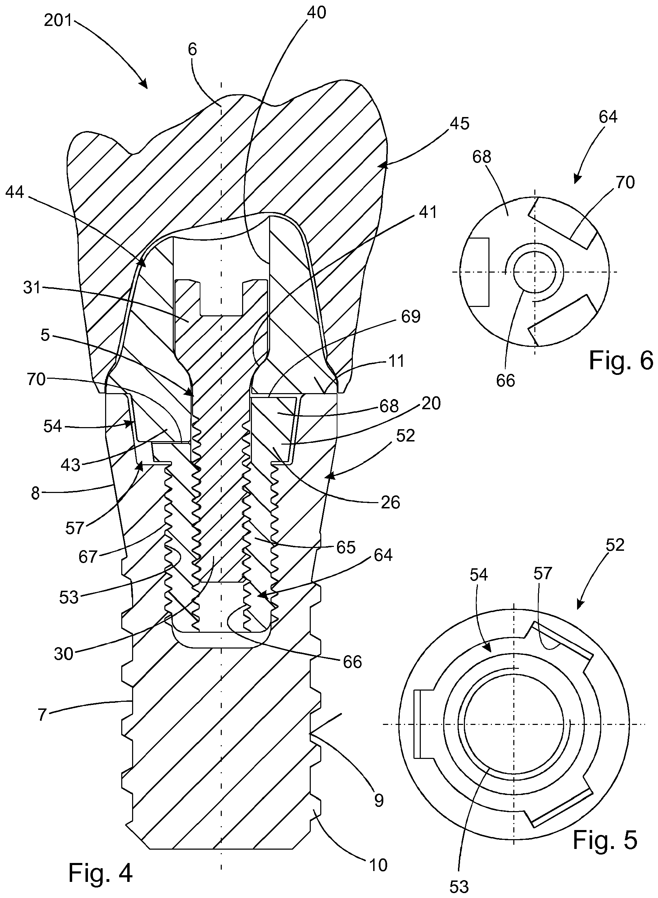

Ein in der Figur 1 gezeigtes Zahnimplantat 1 umfasst einen Implantatkörper 2, ein Koppelteil 3, ein Aufsatzteil 4 sowie eine Schraube 5. Die in den Figuren 2 und 4 gezeigten Zahnimplantate 101 und 201 weisen teilweise identische und teilweise abgeänderte Komponenten auf, wobei für funktionsgleiche Komponenten jeweils die gleichen Bezugszeichen verwendet werden. Die in der Figur 3 dargestellten Komponenten sind lediglich schematische Darstellungen der Komponenten gemäß den Figuren 1, 2 und 4 und sind trotz einiger, für die Funktion nebensächlicher geometrischer Abweichungen mit den gleichen Bezugszeichen wie die Komponenten gemäß der Figur 1 versehen.

Der Implantatkörper 2 des Zahnimplantats 1 ist zapfenförmig oder stabförmig, insbesondere im Wesentlichen rotationssymmetrisch, ausgebildet und erstreckt sich längs einer Mittelachse 6, die auch als Rotationssymmetrieachse angesehen werden kann. Rein exemplarisch weist der Implantatkörper 2 einen Zylinderabschnitt 7 und einen Konusabschnitt 8 auf, wobei eine Außenoberfläche 9 des Zylinderabschnitts 7 mit einem Außengewinde 10 versehen ist, wie es auch der Darstellung des ähnlich ausgebildeten Implantatkörpers 32 gemäß der Figur 3 entnommen werden kann. Der Konusabschnitt 8 schließt sich mit einem Durchmesser an den Zylinderabschnitt 7 an, der dem Durchmesser des Zylinderabschnitts 7 entspricht und weitet sich mit zunehmendem Abstand vom Zylinderabschnitt 7 auf. Eine axiale Stirnfläche 11 des Konusabschnitts 8 ist rein exemplarisch eben ausgebildet und dient zur flächigen Anlage des nachstehend näher beschriebenen Aufsatzteils 4.

Der Implantatkörper 2 ist ausgehend von der Stirnfläche 11 mit einer Ausnehmung 12 versehen, die rein exemplarisch rotationssymmetrisch zur Mittelachse 6 ausgebildet ist und beispielhaft mit zunehmendem Abstand von der Stirnfläche 11 konusförmig verjüngt ausgebildet ist. An einem Mündungsbereich 15 der Ausnehmung 12 ist ein umlaufend ausgebildeter Ringbund 16 vorgesehen, der bezogen auf die Schnittebene der Figur 1 einen im Wesentlichen rechteckigen Querschnitt aufweist. Der Ringbund 16 ist mit mehreren, rein exemplarisch bezogen auf die Mittelachse 6 jeweils in gleicher Winkelteilung angeordneten und auch jeweils gleichartig profilierten Riegelausnehmungen 17 versehen, wie sie insbesondere aus der Darstellung des ähnlich ausgebildeten Implantatkörpers 32 gemäß der Figur 3 zu erkennen sind. Beispielhaft ist vorgesehen, dass ein Innendurchmesser 18 des Ringbunds 16 zumindest im Wesentlichen identisch mit einem Innendurchmesser 19 der Ausnehmung 12 ist und dass sich in axialer Richtung angrenzend an den Ringbund 16 eine in radialer Richtung mit vergrößertem Durchmesser ausgebildete Ringnut 20 erstreckt. Vorzugsweise ist vorgesehen, dass die Ringnut 20 eine trapezförmig, in radialer Richtung nach außen verjüngte Profilierung, aufweist.

Der Ringbund 16 und die Ringnut 20 werden für eine axial formschlüssige Verriegelung eines Koppelteils 3 verwendet, das gemäß der Darstellung der Figur 1 gemäß im Wesentlichen die gleiche Profilierung wie die Ausnehmung 12 und die Ringnut 20 aufweist und das für eine axial formschlüssige Verriegelung in der Ausnehmung 12 des Implantatkörpers 2 ausgebildet ist. Hierzu umfasst das Koppelteil 3 einen konusabschnittsförmig ausgebildeten Grundkörper 25, der rotationssymmetrisch zur Mittelachse 6 ausgebildet ist und der an einem Endbereich mit größerem Durchmesser einen umlaufenden Ringbund 26 aufweist, der zur Aufnahme in der Ringnut 20 ausgebildet ist. Der Ringbund 26 weist in der Schnittdarstellung gemäß der Figur 1 eine zur Profilierung der Ringnut 20 im Wesentlichen identische, in radialer Richtung nach außen verjüngte trapezförmige Profilierung auf. Wie der Darstellung der Figuren 1, 2 und 3 entnommen werden kann, ist der Ringbund 26 mit einer Mehrzahl von rein exemplarisch in gleicher Winkelteilung zur Mittelachse 6 angeordneten und mit jeweils gleicher axialer Profilierung ausgebildeten Riegelaussparungen 27 versehen. Damit bildet der Ringbund 26 aufgrund der Riegelaussparungen 27 mehrere Riegelvorsprünge. Die Riegelaussparungen 27 sind geringfügig größer als die Riegelausnehmungen 17 ausgebildet und ermöglichen somit eine Montage des Koppelteils 3 in die Ausnehmung 12 des Implantatkörpers 2. Durch eine nachfolgende Rotationsbewegung des Koppelteils 3 um die Mittelachse 6 relativ zum Implantatkörper 2 kann gewünschte axial formschlüssige Verriegelung, die auch als Renkverbindung bezeichnet werden kann, mit dem Implantatkörper 2 hergestellt werden.

Wie den Darstellungen der Figuren 1 bis 3 ferner entnommen werden kann, ist das Koppelteil 3 mit einer Gewindebohrung 28 versehen, die sich zumindest nahezu vollständig über die gesamte Länge des Koppelteils 3 erstreckt und die zur Aufnahme eines Gewindeabschnitts 30 einer Befestigungsschraube 5 ausgebildet ist. Die Befestigungsschraube 5 dient zur axial formschlüssigen Kopplung des Aufsatzteils 4 mit dem Koppelteil 3, hierzu liegt die Befestigungsschraube 5 mit einem Kopfteil 31 an einer rein exemplarisch konusabschnittsförmig ausgebildeten Stufe 41 einer im Aufsatzteil 4 ausgebildeten Stufenbohrung 40 an. Um zudem eine rotatorische Verriegelung zwischen dem Implantatkörper 2, dem Koppelteil 3 und dem Aufsatzteil 4 zu bewirken ist vorgesehen, dass am Aufsatzteil 4 in axialer Richtung von einer Stirnfläche 42 abragende, in gleicher Winkelteilung wie die Riegelausnehmungen 17 und die Riegelaussparungen 27 ausgebildete Riegelvorsprünge 43 vorgesehen sind. Die Riegelvorsprünge 43 greifen jeweils formschlüssig in Sperrausnehmungen 21 ein, die von den Riegelausnehmungen 17 und den Riegelaussparungen 27 berandet werden. Durch die formschlüssige Wechselwirkung zwischen den Riegelvorsprüngen 43 und den Riegelausnehmungen 17 und den Riegelaussparungen 27 wird die gewünschte rotatorische Blockierung für die Komponenten: Implantatkörper 2, Koppelteil 3 und Aufsatzteil 4 gewährleistet.

Bei der Ausführungsform gemäß der Figur 1 ist das Aufsatzteil 4 als Krone ausgebildet. Hierbei ist vorgesehen, dass die Stufenbohrung 40 nach dem Verschrauben des Aufsatzteils 4 mit dem Koppelteil 3 in nicht näher dargestellter Weise verschlossen wird.

Bei der Ausführungsform des Zahnimplantats 101 gemäß der Figur 2, bei der der Implantatkörper 2 und das Koppelteil 3 gemäß der Figur 1 zum Einsatz kommen, ist das Aufsatzteil 44 als Trägerteil für eine becherartig ausgebildete Krone 45 ausgebildet, die beispielsweise durch Verkleben oder durch Zementieren am Aufsatzteil 44 festgelegt werden kann.

Bei der Ausführungsform des Zahnimplantats 201 gemäß der Figur 4 werden hingegen ein veränderter Implantatkörper 52 sowie ein verändertes Koppelteil 64 eingesetzt, während rein exemplarisch vorgesehen ist, dass das Aufsatzteil 44 und die Krone 45 sowie die Befestigungsschraube 5 identisch zu der Ausführungsform gemäß der Figur 2 verwendet werden.

Der Implantatkörper 52 ist abweichend vom Implantatkörper 2 mit einer als Gewindebohrung 53 ausgebildeten Ausnehmung versehen. An einem Mündungsbereich 54 sind rein exemplarisch drei jeweils in radialer Richtung nach außen erstreckte Riegelausnehmungen 57 ausgebildet, die gemäß der Darstellung der Figur 5 beispielhaft in axialer Richtung rechteckig profiliert sind. Das Koppelteil 64 weist einen hülsenförmig ausgebildeten Grundkörper 65 auf, der mit einem Innengewinde 66 und einem Außengewinde 67 versehen ist. An den Grundkörper 75 schließt sich in axialer Richtung ein Riegelkörper 68 an, der beispielhaft konusabschnittsförmig ausgebildet ist und sich mit zunehmendem Abstand vom Grundkörper 65 erweitert. An einer dem Aufsatzteil 44 zugewandten Stirnfläche 69 des Riegelkörpers 68 sind mit einer in axialer Richtung rechteckigen Profilierung ausgebildete Riegelaussparungen 70 vorgesehen, die in gleicher Winkelteilung wie die Riegelausnehmungen 57 ausgebildet sind.

Für eine Festlegung des Aufsatzteils 44 am Implantatkörper 52 ist zunächst vorgesehen, das Koppelteil 64 in den Implantatkörper 52 einzuschrauben, bis die Riegelausnehmungen 57 und die Riegelaussparungen 70 gegenüberliegend zueinander angeordnet sind und eine nicht näher dargestellte Sperrausnehmung bilden. Wenn dann in einem nachfolgenden Arbeitsschritt das Aufsatzteil 44 auf das Koppelteil 64 aufgesetzt wird, greifen die Riegelvorsprünge 43 in die Sperrausnehmungen ein und verhindern dadurch formschlüssig eine Schwenkbewegung des Koppelteils 64 gegenüber dem Implantatkörper 52. In einem nachfolgenden Schritt erfolgt die axiale Festlegung des Aufsatzteils 44 am Koppelteil 64 durch Einschrauben der Befestigungsschraube 5, womit die vollständige Verriegelung des Aufsatzteils 44 am Implantatkörper 52 erreicht ist.

## Patentansprüche

1. Zahnimplantat, mit einem stabförmigen, längs einer Mittelachse (6) erstreckten Implantatkörper (2; 32; 52), der an einer Außenoberfläche (9) mit einem Gewinde (10) versehen ist und der eine längs der Mittelachse (6) erstreckte Ausnehmung (12; 53) aufweist, die in einem Mündungsbereich (15; 54) wenigstens eine, in radialer Richtung nach außen und über einen Umfangsabschnitt des Mündungsbereichs (15; 54) erstreckte Riegelausnehmung (17; 57) aufweist, mit einem Koppelteil (3; 64), das zur Aufnahme in der Ausnehmung (12; 43) ausgebildet ist und das eine längs der Mittelachse (6) erstreckte Gewindebohrung (28; 66) aufweist, wobei das Koppelteil (3; 64) an einem Endbereich einen zur Riegelausnehmung (17; 57) korrespondierenden, über einen Umfangsbereich des Koppelteils (3; 64) erstreckten Riegelbereich (27; 70) aufweist, der mit der Riegelausnehmung (17; 57) eine Sperrausnehmung begrenzt, sowie mit einem Aufsatzteil (4; 44), das für eine Festlegung an dem Implantatkörper (2; 32; 52) und dem Koppelteil (3; 64) ausgebildet ist und das einen Riegelvorsprung (43) umfasst, der für einen Eingriff in die Sperrausnehmung ausgebildet ist, und das eine längs der Mittelachse (6) erstreckte, als Stufenbohrung (40) ausgebildete Befestigungsausnehmung aufweist, in der eine Schraube (5) aufgenommen ist, die mit einem Gewindeabschnitt (30) in die Gewindebohrung (28; 66) des Koppelteils (3; 64) eingreift, um eine axiale und eine drehfeste Verriegelung zwischen dem Aufsatzteil (44), dem Koppelteil (3; 64) und dem Implantatkörper (2; 32; 52) zu bewirken, wobei die Riegelausnehmung (17) an einem Ringbund (16) des Implantatkörpers (2; 32) ausgebildet ist, der am Mündungsbereich (15) der Ausnehmung (12) angeordnet ist und wobei der Riegelbereich (27) des Koppelteils (3) einen zur Riegelausnehmung (17) korrespondierenden, radial nach außen erstreckten Riegelvorsprung (26) umfasst, der in einer Verriegelungsstellung des Koppelteils (3) mit dem Implantatkörper (2; 32; 52) den Ringbund (16) des Implantatkörpers (2; 32; 52) in axialer Richtung formschlüssig hintergreift, wobei die Sperrausnehmung von einer Innenoberfläche der Riegelausnehmung (17) und einer Seitenfläche des Riegelvorsprungs (26) begrenzt ist.

2. Zahnimplantat nach Anspruch 1, **dadurch gekennzeichnet, dass** das Koppelteil (3; 64) aus einem hochfesten Kunststoff hergestellt ist und/oder dass der Implantatkörper (2; 32; 52) aus einem Keramikmaterial hergestellt ist und/oder dass das Aufsatzteil (44) aus einem Keramikmaterial hergestellt ist.

3. Zahnimplantat nach Anspruch 1, **dadurch gekennzeichnet, dass** am Ringbund (16) des Implantatkörpers (2; 32) mehrere Riegelausnehmungen (17) ausgebildet sind und dass das Koppelteil (3) mehrere Riegelvorsprünge (26) umfasst und dass das Aufsatzteil (4; 44) mehrere Riegelvorsprünge (43) aufweist.

4. Zahnimplantat nach Anspruch 3, **dadurch gekennzeichnet, dass** der Ringbund (16) des Implantatkörpers (2; 32) und die Riegelvorsprünge (26) des Koppelteils (3) mit einer in Umfangsrichtung rechteckigen Profilierung ausgebildet sind und/oder dass die Riegelausnehmungen (17) am Ringbund (16) des Implantatkörpers (2; 32) und die Riegelvorsprünge (26) des Koppelteils (3) derart aufeinander abgestimmt sind, dass das Koppelteil (3) in genau einer vorgebbaren Rotationsstellung gegenüber dem Implantatkörper (2; 32; 52) montierbar ist.

5. Zahnimplantat nach Anspruch 1 oder 2, **dadurch gekennzeichnet, dass** die Riegelausnehmungen (17) des Implantatkörpers (2; 32) und die Riegelvorsprünge (26) des Koppelteils (3) und der wenigstens eine Riegelvorsprung (43) des Aufsatzteils (4; 44) derart aufeinander abgestimmt sind, dass eine Anbringung des Aufsatzteils (4; 44) gegenüber dem Implantatkörper (2; 32; 52) und dem Koppelteil (3) in genau einer Rotationsstellung ermöglicht ist.

6. Zahnimplantat nach einem der vorhergehenden Ansprüche, **dadurch gekennzeichnet, dass** das Aufsatzteil (4) eine Krone bildet oder dass das Aufsatzteil (44) als Kronenhalter zur Festlegung einer becherartigen Krone (45) ausgebildet ist.

7. Zahnimplantat nach Anspruch 1 oder 2, **dadurch gekennzeichnet, dass** der Riegelbereich (70) als randseitig offene Riegelvertiefung in einer Stirnfläche (69) des Koppelteils (64) ausgebildet ist und zusammen mit der Riegelausnehmung (17) des Implantatkörpers (2; 32) die Sperrausnehmung begrenzt.

8. Zahnimplantat nach Anspruch 1, 2 oder 7, **dadurch gekennzeichnet, dass** in der Ausnehmung (53) des Implantatkörpers (52) ein Innengewinde ausgebildet ist und dass an einer Außenoberfläche des Koppelteils (64) ein korrespondierendes Außengewinde (67) ausgebildet ist.

9. Zahnimplantat nach einem der vorhergehenden Ansprüche, **dadurch gekennzeichnet, dass** die Gewindebohrung des Koppelteils längs der Mittelachse mit zunehmendem Abstand von einer Stirnfläche des Koppelteils, insbesondere konisch, verjüngt ausgebildet ist.

10. Zahnimplantat nach einem der vorhergehenden Ansprüche, **dadurch gekennzeichnet, dass** das Koppelteil bereichsweise geschlitzt ausgebildet ist.

## Claims

1. Dental implant, with a rod-shaped implant body (2; 32; 52) extending along a central axis (6), which is provided with a thread (10) on an outer surface (9) and which has a recess (12; 53) extending along the central axis (6); 53) which has, in a mouth region (15; 54), at least one latch recess (17; 57) extending radially outwards and over a circumferential section of the mouth region (15; 54), with a coupling part (3; 64) which is designed to be received in the recess (12; 43) and which has a longitudinally extending thread (10); 43) and which has a threaded bore (28; 66) extending along the central axis (6), the coupling part (3; 64) having at one end region a locking region corresponding to the locking recess (17; 57) and extending over a circumferential region of the coupling part (3; 64); 64), which extends over a circumferential region of the coupling part (3; 64) and which defines a locking recess with the latch recess (17; 57), as well as with an attachment part (4; 44) which is designed to be fixed to the implant body (2; 32; 52) and the coupling part (3; 64) and which has a latch portion (27; 70) corresponding to the latch recess (17; 57); 64) and which comprises a locking projection (43) which is designed for engagement in the locking recess, and which has a fastening recess which extends along the central axis (6), which is designed as a stepped bore (40) and in which a screw (5) is received which is inserted with a threaded portion (30) into the threaded bore (28; 66) of the coupling part (3; 64) in order to effect axial and rotational locking between the attachment part (44), the coupling part (3; 64) and the implant body (2; 32; 52), wherein the latch recess (17) is formed on an annular collar (16) of the implant body (2; 32), which is arranged at the mouth region (15) of the recess (12), and wherein the locking region (27) of the coupling part (3) comprises a radially outwardly extending locking projection (26) which corresponds to the locking recess (17) and which, in a locking position of the coupling part (3) with the implant body (2; 32; 52), forms the annular collar (16) of the implant body (2; 32; 52); 32; 52), positively engages behind the annular collar (16) of the implant body (2; 32; 52) in the axial direction, the locking recess being bounded by an inner surface of the latch recess (17) and a side surface of the latch projection (26).

2. Dental implant according to claim 1, **characterized in that** the coupling part (3; 64) is made of a high-strength plastic and/or that the implant body (2; 32; 52) is made of a ceramic material and/or that the attachment part (44) is made of a ceramic material.

3. Dental implant according to claim 1, **characterized in that** a plurality of latch recesses (17) are formed on the annular collar (16) of the implant body (2; 32), and **in that** the coupling part (3) comprises a plurality of latch projections (26), and **in that** the attachment part (4; 44) has a plurality of latch projections (43).

4. Dental implant according to claim 3, **characterized in that** the annular collar (16) of the implant body (2; 32) and the latch projections (26) of the coupling part (3) are formed with a profiling which is rectangular in the circumferential direction and/or **in that** the latch recesses (17) on the annular collar (16) of the implant body (2; 32) and the latch projections (26) of the coupling part (3) are matched to one another in such a way that the coupling part (3) can be mounted in exactly one predeterminable rotational position relative to the implant body (2; 32; 52).

5. Dental implant according to claim 1 or 2, **characterized in that** the latch recesses (17) of the implant body (2; 32) and the latch projections (26) of the coupling part (3) and the at least one latch projection (43) of the attachment part (4; 44) are matched to one another in such a way that it is possible to mount the attachment part (4; 44) in exactly one rotational position relative to the implant body (2; 32; 52) and the coupling part (3).

6. Dental implant according to one of the preceding claims, **characterized in that** the attachment part (4) forms a crown or that the attachment part (44) is designed as a crown holder for fixing a cup-like crown (45).

7. Dental implant according to claim 1 or 2, **characterized in that** the latch region (70) is formed as a latch recess open at the edge in an end face (69) of the coupling part (64) and, together with the latch recess (17) of the implant body (2; 32), delimits the locking recess.

8. Dental implant according to claim 1, 2 or 7, **characterized in that** an internal thread is formed in the recess (53) of the implant body (52) and that a corresponding external thread (67) is formed on an outer surface of the coupling part (64).

9. Dental implant according to one of the preceding claims, **characterized in that** the threaded bore of the coupling part is tapered along the central axis with increasing distance from an end face of the coupling part, in particular conically.

10. Dental implant according to one of the preceding claims, **characterized in that** the coupling part is designed to be slotted in regions.

## Revendications

1. Implant dentaire, avec un corps d'implant (2 ; 32 ; 52) en forme de barre, étendu le long d'un axe médian (6), qui est pourvu sur une surface extérieure (9) d'un filet (10) et qui présente un évidement (12 ; 53) étendu le long de l'axe médian (6), qui présente dans une zone d'embouchure (15 ; 54) au moins un évidement de verrouillage (17 ; 57), étendu dans la direction radiale vers l'extérieur et sur une partie périphérique de la zone d'embouchure (15 ; 54), avec une pièce d'accouplement (3 ; 64), qui est réalisée pour être reçue dans l'évidement (12 ; 43) et qui présente un trou fileté (28 ; 66) étendu le long de l'axe médian (6), dans lequel la pièce d'accouplement (3 ; 64) présente sur une zone d'extrémité une zone de verrouillage (27 ; 70) correspondant à l'évidement de verrouillage (17 ; 57), étendue sur une zone périphérique de la pièce d'accouplement (3 ; 64), qui délimite avec l'évidement de verrouillage (17 ; 57) un évidement d'arrêt, ainsi qu'avec une pièce rapportée (4 ; 44), qui est réalisée pour une immobilisation sur le corps d'implant (2 ; 32 ; 52) et la pièce d'accouplement (3 ; 64) et qui comprend une partie saillante de verrouillage (43), qui est réalisée pour une insertion dans l'évidement d'arrêt, et qui présente un évidement de fixation étendu le long de l'axe médian (6), réalisé en tant que trou étagé (40), dans lequel une vis (5) est reçue, qui s'insère avec une partie filetée (30) dans le trou fileté (28 ; 66) de la pièce d'accouplement (3 ; 64), afin de provoquer un blocage axial et solidaire en rotation entre la pièce rapportée (44), la pièce d'accouplement (3 ; 64) et le corps d'implant (2 ; 32 ; 52), dans lequel l'évidement de verrouillage (17) est réalisé sur une collerette annulaire (16) du corps d'implant (2 ; 32), qui est disposée sur la zone d'embouchure (15) de l'évidement (12) et dans lequel la zone de verrouillage (27) de la pièce d'accouplement (3) comprend une partie saillante de verrouillage (26) correspondant à l'évidement de verrouillage (17), étendue radialement vers l'extérieur, qui dans une position de blocage de la pièce d'accouplement (3) avec le corps d'implant (2 ; 32 ; 52) vient se plaquer derrière la collerette annulaire (16) du corps d'implant (2 ; 32 ; 52) dans la direction axiale par coopération de formes, dans lequel l'évidement d'arrêt est délimité par une surface intérieure de l'évidement de verrouillage (17) et une surface latérale de la partie saillante de verrouillage (26).

2. Implant dentaire selon la revendication 1, **caractérisé en ce que** la pièce d'accouplement (3 ; 64) est fabriquée à partir d'une matière plastique à haute résistance et/ou que le corps d'implant (2 ; 32 ; 52) est fabriqué à partir d'un matériau céramique et/ou que la pièce rapportée (44) est fabriquée à partir d'un matériau céramique.

3. Implant dentaire selon la revendication 1, **caractérisé en ce que** plusieurs évidements de verrouillage (17) sont réalisés sur la collerette annulaire (16) du corps d'implant (2 ; 32) et que la pièce d'accouplement (3) comprend plusieurs parties saillantes de verrouillage (26) et que la pièce rapportée (4 ; 44) présente plusieurs parties saillantes de verrouillage (43).

4. Implant dentaire selon la revendication 3, **caractérisé en ce que** la collerette annulaire (16) du corps d'implant (2 ; 32) et les parties saillantes de verrouillage (26) de la pièce d'accouplement (3) sont réalisées avec un profilage rectangulaire dans la direction périphérique et/ou que les évidements de verrouillage (17) sur la collerette annulaire (16) du corps d'implant (2 ; 32) et les parties saillantes de verrouillage (26) de la pièce d'accouplement (3) sont adaptés les uns aux autres de telle sorte que la pièce d'accouplement (3) peut être montée dans une seule position de rotation pouvant être prédéfinie par rapport au corps d'implant (2 ; 32 ; 52).

5. Implant dentaire selon la revendication 1 ou 2, **caractérisé en ce que** les évidements de verrouillage (17) du corps d'implant (2 ; 32) et les parties saillantes de verrouillage (26) de la pièce d'accouplement (3) et la au moins une partie saillante de verrouillage (43) de la pièce rapportée (4 ; 44) sont adaptés les uns aux autres de telle sorte qu'une application de la pièce rapportée (4 ; 44) par rapport au corps d'implant (2 ; 32 ; 52) et à la pièce d'accouplement (3) dans une seule position de rotation est permise.

6. Implant dentaire selon l'une quelconque des revendications précédentes, **caractérisé en ce que** la pièce rapportée (4) forme une couronne ou que la pièce rapportée (44) est réalisée en tant que porte-couronne pour l'immobilisation d'une couronne (45) du type godet.

7. Implant dentaire selon la revendication 1 ou 2, **caractérisé en ce que** la zone de verrouillage (70) est réalisée en tant qu'évidement de verrouillage ouvert côté bord dans une surface frontale (69) de la pièce d'accouplement (64) et délimite conjointement avec l'évidement de verrouillage (17) du corps d'implant (2 ; 32) l'évidement d'arrêt.

8. Implant dentaire selon la revendication 1, 2 ou 7, **caractérisé en ce qu'**un filet intérieur est réalisé dans l'évidement (53) du corps d'implant (52) et qu'un filet extérieur (67) correspondant est réalisé sur une surface extérieure de la pièce d'accouplement (64).

9. Implant dentaire selon l'une quelconque des revendications précédentes, **caractérisé en ce que** le trou fileté de la pièce d'accouplement est réalisé de manière amincie, en particulier de manière conique, le long de l'axe médian avec une distance croissante par rapport à une surface frontale de la pièce d'accouplement.

10. Implant dentaire selon l'une quelconque des revendications précédentes, **caractérisé en ce que** la pièce d'accouplement est réalisée de manière fendue par endroits.
